Europäisches Patentamt

European Patent Office

Office européen des brevets

(11) Veröffentlichungsnummer: **0 048 960**
**B1**

(12) **EUROPÄISCHE PATENTSCHRIFT**

(45) Veröffentlichungstag der Patentschrift:
18.12.85

(51) Int. Cl.⁴: **G 01 F 9/00**

(21) Anmeldenummer: **81107598.5**

(22) Anmeldetag: **24.09.81**

(54) **Mengenmesseinrichtung für flüssige Kraft- und Brennstoffe in Einspritzanlagen für Triebwerke, insbesondere in Einspritzanlagen für Verbrennungsmotore sowie stationäre Brenneranlagen.**

(30) Priorität: **01.10.80 DE 3037076**

(43) Veröffentlichungstag der Anmeldung:
**07.04.82 Patentblatt 82/14**

(45) Bekanntmachung des Hinweises auf die Patenterteilung:
**18.12.85 Patentblatt 85/51**

(84) Benannte Vertragsstaaten:
**CH DE FR IT LI**

(56) Entgegenhaltungen:
**EP - A - 0 043 283**
**WO - A - 81/01462**
**DE - B - 1 150 822**
**GB - A - 1 472 991**
**US - A - 3 672 394**

**Elektor, Nr. 112, April 1980, S. 24-33**

**Die Akte enthält technische Angaben, die nach dem Eingang der Anmeldung eingereicht wurden und die nicht in dieser Patentschrift enthalten sind.**

(73) Patentinhaber: **Nardin, Peter, Bubenheimer Weg 48, D-5400 Koblenz (DE)**

(72) Erfinder: **Nardin, Peter, Bubenheimer Weg 48, D-5400 Koblenz (DE)**

## Beschreibung

Die Erfindung betrifft eine Mengenmesseinrichtung für flüssige Kraft- und Brennstoffe in Einspritzanlagen von Triebwerken, bestehend aus einem an einen Kraftstoffbehälter anschliessbaren, eine Niederdruckpumpe und ein Druckhalteventil aufweisenden Niederdruckleitungskreis, der durch einen Einfachstrang über eine Förderpumpe an eine Einspritzvorrichtung angeschlossen ist, wobei der Einfachstrang einen Durchflussmengenmesser aufweist, der mit einem Anzeigegerät verbunden ist.

Unter dem Begriff «Triebwerke» sollen auch Gasturbinen sowie Ölbrenner bzw. Brennaggregate an Heizungskesseln und sonstigen feuerungstechnischen Anlagen mit Mitteln zur Aufnahme, Verarbeitung und Umwandlung unterschiedlich zu regelnder Durchflussströme in Form von flüssigen Kraft- und Brennstoffen verstanden sein.

Aus dem Patent US-A-3 672 394, mit dem Titel: FUEL SYSTEM FOR DIESEL ENGINES, geht eine solche Vorrichtung als bekannt hervor, bei dem ein Kraftstoffzwischenspeicher mit einer Schwimmeranordnung die eingespritzte Kraft- und Brennstoffmenge misst.

Nachteil des genannten US-Patentes ist jedoch, dass das gesamte Fluidfördersystem nicht folgerichtig auf die Konsistenz des zu fördernden Kraft- und Brennstoffes abgestimmt ist, hierfür nicht ausgelegt wurde und daher auch keine exakte Messung der eingespritzten Kraft- und Brennstoffströme durch ein digital arbeitendes sowie digital anzeigendes Betriebsdaten-Anzeigegerät ermöglicht wird.

Hinzu kommt, dass durch Mineralsalze, die in dem Fluid eingeschlossen sind und leitend wirken, während des Abgreifens der Mess- und Potentialspannungen gegebenenfalls irrige Füllstände angezeigt werden.

Digitale Betriebsdaten-Anzeigegeräte für Kraftfahrzeuge sind bekannt, zum Beispiel aus der Zeitschrift «Elektor», 04/80, NR 112, Seite 4–25 bis 4–27.

Aufgabe der Erfindung ist es, eine Mengenmesseinrichtung für flüssige Kraft- und Brennstoffe der eingangs beschriebenen Art zu schaffen, durch die die Füll- und Verbrauchsstände von flüssigen Kraft- und Brennstoffen in allen Fahr- und Betriebssituationen fehlerfrei aufgezeigt werden, um dadurch auch Rückschlüsse auf andere mit einer Einspritzanlage in Zusammenhang stehende technische Mängel treffen zu können und um dadurch auf eine kostengerechte, energiebewusste und umweltfreundliche Betriebsweise hinwirken zu können.

Zusätzlich soll durch die gleiche Messeinrichtung der Schadstoffanteil in dem Grundlast-, Teillast- und Volllastbereich, insbesondere jedoch im Leerlauf, ermittelt werden können.

Ausserdem sollen dem Fahrzeuglenker Informationen im Hinblick auf die optimale Fahrzeugfahrgeschwindigkeit zur Erzielung eines minimalen Kraftstoffverbrauches bei sich ändernden äusseren und inneren Fahrwiderständen gegeben werden.

Die Lösung dieses Problems wird bei einer Vorrichtung der eingangs genannten Art darin gesehen, dass die Merkmale der Erfindung gemäss dem Kennzeichen des Patentanspruchs 1 verwirklicht werden.

Solche Mengenmesseinrichtungen sollen die bisher gebräuchlichen Differenzmessungen analoger Bauart in den Tankbehältern oder zwischen den Vor- und Rücklaufleitungen in Einspritzanlagen ersetzen und deren Anzeigegenauigkeit mit mindestens einem Impulsfrequenzgeber erhöhen, wobei das Strömungszählrad an eine Mikroprozessoreinheit zur Lieferung numerischer Daten mit oder ohne Ausdruckvorrichtung anzuschliessen ist.

Aufgrund dieser Funktionskombination wird eine erschütterungsfreie leerlast-, teillast- und vollastunabhängige Messung des Verbrauches von flüssigem Kraft- und Brennstoff in Einspritzanlagen erreicht.

Die Unteransprüche nennen weitere vorteilhafte Ausführungsarten der Erfindung.

In Anspruch 2 wird davon ausgegangen, dass eine Vielzahl von Brennaggregaten mit jeweils einem Einfachstrang, an den der Hochdruckleitungskreis anzuschliessen ist, ausgerüstet wird und dass alle Einfachstränge zusammen an die Mengenmesseinrichtung als die zentral installierte Baueinheit anschliessbar sind.

In Anspruch 3 wird festgelegt, dass ein Brennaggregat mit einem eigenen Kraftstoffverbrauchszähler in Form des beschriebenen Durchflussmessgerätes sowie dem nachgeschalteten Hochdruckleitungskreis auszurüsten ist und dass der Tankbehälter weiter entfernt an anderer Stelle installiert werden kann.

Anspruch 4 beinhaltet eine Überlast- und Betriebssicherung in Einspritzanlagen für flüssige Kraft- und Brennstoffe. Durch das wendelförmig geführte Leitungsteil, das zu der Abführung von Übertemperaturen oder auch nur zu der Temperaturkonstanthaltung dient, soll erreicht werden, dass keine Gas- und Dampfblasenbildung aufgrund von Überhitzungsvorgängen sowie in Verbindung mit einem negativen Druckgefälle in dem Fluidfördersystem zustande kommen kann und dass die für den Einspritzvorgang vorgegebene Viskosität derjenigen Kraft- und Brennstoffmenge, die sich in dem Hochdruckleitungskreis befindet, auch eingehalten wird.

In Anspruch 5 wird abgesichert, dass eine Vielzahl von Einfachsträngen mit den hieran angeschlossenen Hochdruckleitungskreisen durch nur einen Durchflussmesser als zentrale Baueinheit versorgt werden kann, vorausgesetzt, der Niederdruckleitungskreis weist nur ein Druckhalteventil als Rückströmwiderstand auf, um den erforderlichen Förderdruck und die erforderliche Fördermenge liefern und halten zu können.

In Anspruch 6 wird dargelegt, dass ein Druckgefälle und damit ein Druckabbau zwischen dem Hochdruckleitungskreis und dem Niederdruckleitungskreis auch entgegen der Strömungsrichtung in dem Fluidfördersystem zustande kommen muss, um bei unkontrollierten Überhitzungsvorgängen unterhalb des Berstdruckes in dem Fluidfördersystem zu liegen. Denn je höher der Einspritzdruck, desto besser die Kraft- und Brennstoffzerstäubung.

In Anspruch 7 wird festgelegt, dass die Rückströmleitung mit dem Rückströmwiderstand in dem Niederdruckleitungskreis entfallen kann, wenn der erforderliche Druckaufbau bereits in dem Kraftstofftank einsetzt und wenn der erforderliche Druckaufbau durch ein nicht brennbares Druckgas herbeigeführt wird. Beispielsweise wird die Eigenentzündungstemperatur des Kraftstoffes hierdurch gesenkt, insbesondere dann, wenn der Kraftstofftank in dem hinteren Teil des Kraftfahrzeuges eingebaut wurde und wenn dieser durch einen Auffahrunfall eingedrückt und beschädigt worden ist.

In Anspruch 8 wird herausgestellt, dass statt der Verwendung eines nicht brennbaren Druckgases gemäss Anspruch 7 der erforderliche Druckaufbau in dem Kraftstoffbehälter auch durch Verdampfen des Kraftstoffes erreicht werden kann, und zwar zum einen durch die direkte Erwärmung des Kraftstoffes in Form von elektrisch beheizten Heizelementen oder auch in Form von Heissluft durchströmten Heissluftrohren, die über dem Tankbehälterboden innerhalb des Kraftstofftankes zu installieren sind. Zum anderen besteht die Möglichkeit der indirekten Erwärmung durch einen doppelwandigen Tank- und Kraftstoffbehälter, der in seiner Doppelwandung mit einer Motorenkühlflüssigkeit gefüllt ist und der entweder durch Heizelemente oder durch die Motorabwärme beheizt wird. Im letzteren Betriebsfall wurde das sicherungstechnische Baumerkmal erhöht und die Erwärmung ausserhalb des eigentlichen, mit Kraftstoff betankten Tankbehälters vorgenommen, wodurch die Vorgabetemperatur des Kraftstoffes gegebenenfalls veränderbar ist.

In Anspruch 9 wird sichergestellt, dass der Schadstoffanteil in dem Abgas eines Kraftfahrzeuges sowohl aus dem gemessenen Kraftstoffverbrauch als auch aus der gemessenen Motordrehzahl ermittelt werden muss und dass die Schadstoffanteile in dem Abgas, insbesondere in dem Leerlaufbetrieb, zu errechnen sind, so dass die Schadstoffanteile insgesamt durch das digitale Betriebsdaten-Rechner/Anzeigesystem für das menschliche Auge sichtbar gemacht werden können. Denn sowohl für den Kaltstartbetrieb als auch für den Warmlaufbetrieb einer Verbrennungskraftmaschine ist der exakt gemessene Kraftstoffverbrauchswert von grossem Einfluss auf die Motorölwechselintervalle. Da sich darüber hinaus der abgegebene, eingespritzte und gemessene Kraftstoffverbrauchswert aus der Luftsaugtemperatur sowie aus innermotorischen Temperaturkomponenten ergibt, ist der Kraftstoffverbrauchswert auch ein Mass dafür, welche Schadstoffe bei welcher Motordrehzahl entstehen.

Dabei können die 3 wesentlichsten in dem Abgas enthaltenen Schadstoffanteile wie Kohlenmonoxid, Kohlenwasserstoff und Stickoxide auf 3 nebeneinander liegenden Digitalanzeigen gleichzeitig berechnet und ausgegeben werden, wenn die hierzu erforderlichen Rechnerparameter in Abhängigkeit der Kraftstoffverbrauchswerte sowie in Abhängigkeit einer konstanten Leerlauf- und Luftsaugdrehzahl in das digitale Betriebsdaten-Rechner/Anzeigegerät eingegeben werden.

In Anspruch 10 wird festgelegt, dass der durch das digitale Betriebsdaten-Rechner/Anzeigegerät errechnete Kraftstoffverbrauch als IST-Wertausgabe, das heisst, als der tatsächlich gemessene Kraftstoffverbrauchswert, ausgegeben wird und dass diese IST-Wertausgabe mit der SOLL-Wertausgabe, das heisst, mit dem theoretisch und konstruktiv nach den DIN-Normen ermittelten Kraftstoffverbrauchswert, auf 2 voneinander unabhängig arbeitenden Digitalanzeigen für das menschliche Auge sichtbar zu machen ist.

Mit anderen Worten heisst das, dass die IST-Wertausgabe den Kraftstoff-IST-Verbrauch für den jeweiligen inneren und äusseren Fahrwiderstand aufzeigt, wohingegen der Kraftstoff-SOLL-Verbrauch den theoretischen Vergleichswert für das nach den DIN-Normen ermittelte Fahrzeugfahrgewicht auf einer zweidimensionalen Fahrebene liefert.

Aufgrund dieses Rechenvorganges sind die einzelnen Fahr- und Betriebszustände, und zwar sowohl bei Lastbetrieb als auch bei Leerlaufbetrieb, getrennt nach den IST- und den SOLL-Wertangaben zu errechnen, zu kumulieren und während des Fahrvorganges vergleichbar und anzeigbar zu machen.

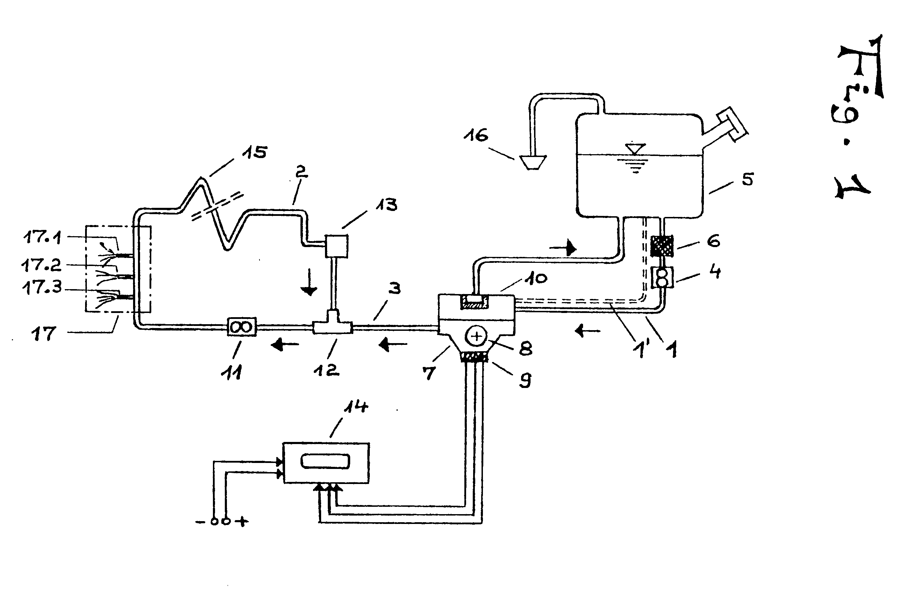

Die Zeichnung in Figur 1 zeigt eine Ausführungsform der neuen Mengenmesseinrichtung mit Niederdruck- und Hochdruckleitungskreis in schematischer Darstellung.

In der Zeichnung ist gestrichelt auch die Ausführungsform mit einem Niederdruckeinfachstrang 1' statt des Niederdruckleitungskreises 1 eingezeichnet.

Durch das Zusammenfassen von Steuerungsgruppen zu einer Baueinheit 7, die von flüssigen Kraft- und Brennstoffen zu durchströmen ist, wird eine raumsparende Bauausführung erzielt und das Angebot zur Einspeisung flüssiger Kraft- und Brennstoffe in den Niederdruckleitungskreis 1 sowie in den Hochdruckleitungskreis 2 selbst bei Vollast aufrechterhalten.

Erwärmungen durch das Umwälzen der flüssigen Kraft- und Brennstoffe, insbesondere in dem Hochdruckleitungskreis 2, sind durch eine mehrfach gewundene Leitungsführung 15 an die Umgebung abzuführen.

Dabei ist ein Niederdruckleitungskreis 1 mit einem Hochdruckleitungskreis 2 durch einen Einfachstrang 3 zu verbinden. Durch eine Niederdruckpumpe 4 wird ein Umwälzen des Volumen- bzw. Fluidstromes in dem Niederdruckleitungskreis 1 erzeugt, und zwar derart, dass die flüssige Kraft- und Brennstoffmenge aus einem Tankbehälter 5 durch ein Feinfilter 6 gegen einen Durchflussmesser 8 gefördert wird, der wiederum eine Teilung des geförderten Fluids derart herbeiführt, dass der von den Motoren- bzw. Brennaggregaten angeforderte Verbrauchsstrom in Form des flüssigen Kraft- und Brennstoffes über ein Strömungs- bzw. Mengenzählrad 8 mit einem an dieses angeschlossenen Spannungsimpulsgeber 9 in den Einfachstrang 3 eingespeist wird und der Durchflussüberschussstrom an flüssigem Kraft- und Brennstoff über den Rückströmwiderstand 10 als Druckhalteventil dem Tankbehälter 5 wieder zugeführt wird.

Durch diese Anordnung stellt der Niederdruckleitungskreis 1 einen geschlossenen Kreislauf unter Ausschaltung eines Leitungsvakuums dar.

Darüber hinaus ist der Tankbehälter 5 gegen die freie Atmosphäre mit einem Kraftstoffdampf- oder Druckgasüberdruckventil 16 zu versehen.

In dem Hochdruckleitungskreis 2 wird der von diesem angeforderte flüssige Kraft- und Brennstoff durch die Hochdruckpumpe 11 umgewälzt und durch die Spritzdüsen 17.1, 17.2 und 17.3 verbraucht.

Der in den Hochdruckleitungskreis 2 eingespeiste und nicht verbrauchte Volumen- bzw. Massenstrom ist daher im Rückstrom des Hochdruckleitungskreises 2 über einen Druckregler bzw. über ein Überdruckventil 13 in ein T-Rohrstück 12 vor der Pumpe 11 zurückzuleiten.

Dadurch wird die verbrauchte flüssige Kraft- und Brennstoffmenge durch den Einfachstrang 3 direkt nachgespeist, wodurch eine Verdampfung flüssiger Kraft- und Brennstoffteile aufgrund eines negativen Druckgefälles, insbesondere aufgrund einer Vakuumbildung in den Leitungssträngen 1, 1′, 2 und 3 vermieden wird.

Eine zusätzliche Kühlung in dem Zusammenhang mit der Vermeidung eines Vakuums ist durch Anbringung einer wendelförmig gewundenen Kraft- und Brennstoffleitung 15 zu bewerkstelligen.

Die Kraft- und Brennstoffverbrauchsparameter sind durch einen 4-/8-/16-Bit-Prozessor 14 aufgrund des Spannungsflusses aus dem Spannungsimpulsgeber 9 zu errechnen und direkt digital oder über einen Streifendrucker auszugeben.

Als Folge dieser Anordnung können beliebig viele Einfachstränge 3 an den Niederdruckleitungskreis 1 angeschlossen werden, vorausgesetzt, das $(X_{n-x})$te Strömungszählrad 8 verfügt über einen Rückströmwiderstand 10.

Dadurch entfallen x Rückströmwiderstände 10 für n Strömungszählräder 8, an die jeweils die Hochdruckleitungskreise 2 anzuschliessen sind.

An jeden Einfachstrang 3 ist somit ein Hochdruckleitungskreis 2 anzuschliessen, durch den unabhängig von der Anzahl an Hochdruckleitungskreisen 2 ein Motoren- oder Brennaggregat in Form der Einspritzdüsen 17.1, 17.2 und 17.3 betrieben werden kann. Dabei sind die Spritz- oder Einspritzdüsen 17.1, 17.2 und 17.3 als Bestandteil der Einspritzvorrichtung 17 zu sehen.

Darüber hinaus ist in der Zeichnung mit 1′ der anstelle des Niederdruckleitungskreises 1 einsetzbare Niederdruckeinfachstrang 1′ bezeichnet, in den gegebenenfalls ein Feinfilter einsetzbar ist.

Durch den Niederdruckeinfachstrang 1′ entfällt ein Umwälzen des Kraftstoffes in dem Niederdruckleitungskreis 1 mit allen technischen Folgen hieraus und die Temperatur der flüssigen Kraft- und Brennstoffe bleibt durch die in den Ansprüchen 7 und 8 genannten Merkmale kontrollierbar.

**Patentansprüche**

1. Mengenmesseinrichtung für flüssige Kraft- und Brennstoffe in Einspritzanlagen für Triebwerke, insbesondere in einem Kraftfahrzeug, bestehend aus einem an einen Kraftstoffbehälter (5) anschliessbaren, eine Niederdruckpumpe (4) und ein Druckhalteventil (10) aufweisenden Niederdruckleitungskreis (1), der durch einen Einfachstrang (3) über eine Förderpumpe (11) an eine Einspritzvorrichtung (17) angeschlossen ist, wobei der Einfachstrang (3) einen Durchflussmengenmesser (8) aufweist, der mit einem Anzeigegerät verbunden ist, dadurch gekennzeichnet, dass der Einfachstrang (3) in einen Hochdruckleitungskreis (2) mündet, der die Förderpumpe als Hochdruckpumpe (11) aufweist und der über die Einspritzvorrichtung (17) mit einem Überdruckventil (13) verbunden ist, und dass das Druckhalteventil (10) als Rückströmwiderstand mit einem an das Durchflussmengenmessgerät (8) angeschlossenen Spannungsimpulsgeber (9) an der Verbindungsstelle von Einfachstrang (3) und Niederdruckleitungskreis (1) zu einer Baueinheit (7) zusammengefasst und mit einem digitalen Betriebsdaten-Rechner/Anzeigegerät (14) verbunden ist.

2. Mengenmesseinrichtung nach Anspruch 1, dadurch gekennzeichnet, dass eine Vielzahl von Einfachsträngen (3) mit angeschlossenen Hochdruckleitungskreisen an die Baueinheit (7) anschliessbar ist.

3. Messeinrichtung nach Anspruch 2, gekennzeichnet durch ein Mengenzählrad (8) als Durchflussmengenmessgerät für jeweils einen angeschlossenen Hochdruckleitungskreis (2).

4. Messeinrichtung nach einem der Ansprüche 1 bis 3, dadurch gekennzeichnet, dass in dem Rücklaufstrang jedes Hochdruckleitungskreises (2) ein wendelförmig geführtes Leitungsteil (15) zur Abführung von Übertemperaturen eingebaut ist.

5. Messeinrichtung nach einem der Ansprüche 1 bis 4, gekennzeichnet durch einen einzigen Rückströmwiderstand (10) in der Baueinheit (7) für alle an den Durchflussmengenmesser (8) angeschlossenen Hochdruckleitungskreise (2).

6. Messeinrichtung nach einem der Ansprüche 3 bis 5, dadurch gekennzeichnet, dass zum Druckausgleich zwischen dem Hochdruckkreis (2) und dem Kraftstofftank (5) das Mengenzählrad (8) des Durchflussmengenmessers auch entgegen der Strömungsrichtung drehbar ist.

7. Messeinrichtung nach einem der Ansprüche 1 bis 6, dadurch gekennzeichnet, dass statt des Niederdruckleitungskreises (1) ein Niederdruckeinfachstrang (1′) unter Fortfall der Rückströmleitung des Niederdruckleitungskreises (1) eingesetzt ist und der erforderliche Druckaufbau durch in den Kraftstofftank eingeführtes $CO_2$-Gas, ein anderes nicht brennbares Druckgas oder durch Pressluft einleitbar ist.

8. Messeinrichtung nach einem der Ansprüche 1 bis 6, dadurch gekennzeichnet, dass statt des Niederdruckleitungskreises (1) ein Niederdruckeinfachstrang (1') unter Fortfall der Rückströmleitung des Niederdruckleitungskreises eingesetzt ist und der erforderliche Druckaufbau durch Verdampfen des Kraftstoffes im Kraftstofftank (5) durch direkte oder indirekte Erwärmung des Kraftstoffes, gegebenenfalls des Kraftstofftanks (5), bewirkbar ist und der Druck über ein Druckanzeigegerät anzeigbar und die Vorgabetemperatur gegebenenfalls veränderbar ist.

9. Messeinrichtung nach einem der Ansprüche 1 bis 8, dadurch gekennzeichnet, dass der Schadstoffanteil im Abgas bei Leerlauf aus dem vom Spannungsimpulsgeber (9) abgegebenen Kraftstoffverbrauchswert und aus der von einem Drehzahlmesser ermittelten Leerlaufdrehzahl in dem digitalen Betriebsdaten-Rechner/Anzeigegerät (14) ermittelbar und anzeigbar ist.

10. Messeinrichtung nach einem der Ansprüche 1 bis 9, dadurch gekennzeichnet, dass der im Betriebsdatenanzeigegerät (14) von dem Mengenzählrad (8) über den Spannungsimpulsgeber (9) ermittelte Kraftstoff-IST-Verbrauch sowohl bei Lastbetrieb als auch bei Leerlaufbetrieb mit einem vorgegebenen Kraftstoff-SOLL-Verbrauch im digitalen Betriebsdaten-Rechner/Anzeigegerät (14) vergleichbar und anzeigbar ist.

## Claims

1. Measurement arrangement for a flowable fuel quantity in injection systems for power plants, especially in an automobile, comprising the low pressure circular pipe (1), which is connected with the low pressure conveying pump (4), with the fuel tank (5) as well as with the specific maintain charging flow tube resistances (10) in the kind of a non-reversible flow control, and which is further connected with the low pressure single pipe (3), with the liquid treating pump (11) as well as with the injection device (17), whereas the low pressure single pipe (3) combines the flow meter (8) for quantities and mass streams of fluids, which are shown on an indication group, so that said the low pressure single pipe (3) ends within the high pressure circuit (2), having the injection device (17), connected with the high pressure maintenance flow valve (13) within the high pressure circuit, and said the specific maintain charging flow tube resistances (10) as a non-reversible flow control must be combined by a pulse generator (9), sensorized by the work-cell-wheel (8), which must be set up in the point of deviation between the low pressure single pipe (3) and the low pressure circular pipe (1), and which is gathered to only one central measure unit (7) to be combined to the servicies indicating and operating display and dialogue console (14) for process data and process computing systems, termed as the digital ranger.

2. Measurement arrangement, the combination as defined in claim 1, further comprising a fold number of low pressure single pipes (3) together with high pressure circuits to be added to only one central measure unit (7), all together.

3. Measurement arrangement, the combination as defined in claim 2, further comprising more than one work-cell-wheel (8) within one flow meter housing structure for all liquid quantities and massed streams of fluids, connected with only one of the high pressure circuits (2).

4. Measurement arrangement, the combinations as defined in the claims 1 till 3, comprising the coiled formations of tubes (15), in the specified manner of cooling and heat exchanged devices, which must be set up within the high pressure circuit (2), and which must be reversible to each of them.

5. Measurement arrangement, the combinations as defined in the claims 1 till 4, comprising only one specific maintain charging flow tube resistance (10) as one non-reversible flow control within the central measure unit (7) and with only one single work-cell-wheel (8) within one flow meter, with which are connected all of the high pressure circuits (2).

6. Measurement arrangement, the combinations as defined in the claims 1 till 5, comprising the work-cell-wheel (8) of the flow meter, being reversible and without any oneway conveying conditions and being available for the diminution of overheated pressure between the high pressure circuit (2) and the fuel tank (5).

7. Measurement arrangement, the combinations as defined in the claims 1 till 6, comprising the low pressure one pipe (1') instead of the specific maintain charging flow tube resistances as a non-reversible flow control of the low pressure circular pipe (1), and of its whole, so that heating and limitation of pressure is storaged by carbon dioxide gas, which must be led into the fuel tank, or by any other non-inflammable inactive gas, or only by compressed air, as well.

8. Measurement arrangement, the combinations as defined in the claims 1 till 6, comprising the low pressure one pipe (1') instead of the pressure circular pipe (1) of its whole circuit, and instead of the specific maintain charging flow tube resistances as a non-reversible flow control, so that the predetermined treating and limitation of pressure must be storaged by vaporizing of liquid fuel within the fuel tank (5) to be set up either by a direct primary method or by an indirect lighting method for cooling and heat exchanged devices, either by the fuel remained quantity within the fuel tank (5), or outside by itself, and that the pressure is alterable gauged by specific safety requirements, indicating, that operating pressure is available within the tank.

9. Measurement arrangement, the combinations as defined in the claims 1 till 8, comprising the digital ranger (14), to which are extended the propellings and movings by the revolution counter, and to which are cumulated the values of consumed fuel, to be sensorized by the pulse generator (9), and to which are calculated the waste fuel exhaustions, set up at the idle speed, as well.

10. Measurement arrangement, the combinations as defined in the claims 1 till 9, comprising the displays of the digital ranger (14), to which the fuel actualized values are digitized by the work-cell-wheel (8) and combined with the pulse generator (9) for full loaded gearing as well as for ground loaded gearing, and to which the indexed values of fuel consumptions are to be compared with such displays of the servicies indicating and operating display and dialogue console (14) for process data and process computing systems, to which the nominal values are made visible, too.

**Revendications**

1. Appareil de mesure de quantités de carburants et combustibles fluides pour des systèmes d'injection de moteurs, en particulier dans un automobile et dans un véhicule transporteur, composé d'un circuit de tubes à basse pression (1) susceptible d'être relié à un réservoir de carburant (5), et comportant une pompe à basse pression (4) et une soupape de tenue de pression (10) et raccordé à l'aide d'une branche unique (3) par l'intermédiaire d'une pompe de refoulement (11) à un dispositif d'injection (17), la branche unique (3) portant un débitmetre (8) relié lui-même à un indicateur et caractérisé en ce que la branche unique (3) aboutit à un circuit de tubes à haute pression (2) qui porte la pompe de refoulement comme pompe à haute pression (11) et reliée à une soupape de surpression (13) en passant par le dispositif d'injection (17) et en ce que la soupape de tenue de pression (10) en tant que dispositif anti-retour single est regroupée en un ensemble (7) avec un pulseur électronique pour des ondes en dôme (9) branché au débitmètre (8) au point de liaison de la branche unique (3) et du circuit de tubes à basse pression (1) et est eliée à un calculateur de processus/indicateur à affichage numérique (14).

2. Appareil de mesure selon la revendication 1 caractérisé en ce qu'un grand nombre de branches uniques (3) reliées à des circuits de tubes à haute pression peuvent être branchées à l'ensemble (7).

3. Appareil de mesure selon la revendication 2, caractérisé par plus qu'un totalisateur (8) de quantité et de masse pour tous les fuel-oils comme un débitmètre, branché respectivement pour un circuit de tubes à haute pression (2).

4. Appareil de mesure selon l'une des revendications 1 à 3, caractérisé par le fait que dans la branche de retour de chaque circuit de tubes à haute pression (2) a été intégré une section de tube (15) de forme hélicoidale pour l'évacuation des élévations de température.

5. Appareil de mesure selon l'une des revendications 1 à 4, caractérisé par un dispositif anti-retour unique (10) dans l'ensemble (7) pour tous les circuits de tubes à haute pression (2) reliés à un débitmètre (8).

6. Appareil de mesure selon l'une des revendications 1 à 5 caractérisé par le fait que le compteur (8) du débitmètre peut être inversé, même contre le courant, pour assurer l'équilibre de pression entre le circuit haute pression (2) et le réservoir de carburant (5).

7. Appareil de mesure selon l'une des revendications 1 à 6, caractérisé par le fait qu'une branche unique à basse pression (1') a été montée au lieu du circuit de tubes à basse pression (1) en éliminant la conduite de reflux du circuit de tubes à basse pression (1), et que l'élévation de niveau de pression nécessaire peut être mise en route à l'aide de gaz $CO_2$ introduit dans le réservoir de carburant, d'un autre gaz de pression ininflammable ou à l'aide d'air comprimé.

8. Appareil de mesure selon l'une des revendications 1 à 6, caractérisé par le fait qu'une branche unique à basse pression (1') a été montée au lieu du circuit de tubes à basse pression (1) en éliminant la conduite de reflux du circuit de tubes à basse pression (1), et que l'élévation du niveau de pression nécessaire peut être effectuée par l'évaporation de carburant dans le réservoir (5) par échauffement directe ou indirecte du carburant, éventuellement du réservoir (5), que la pression peut être affichée par un indicateur de pression et que la température sélectionnée est éventuellement altérable.

9. Appareil de mesure selon l'une des revendications 1 à 8, caractérisé par le fait que le taux d'éléments polluants dans les gaz d'échappement au ralenti pris sur la consommation en carburant indiquée par le pulseur électronique pour des ondes en dômes (9) et sur la vitesse au ralenti indiquée par un compteur de vitesse peut être constatée ou altérée et affichée par un calculateur de processus/indicateur avec affichage numérique.

10. Appareil de mesure selon l'une des revendications 1 à 9, caractérisé par le fait que la consommation effective de carburant constatée et alterée dans le calculateur de processus (14) par le totalisateur (8) de quantité et de masse par en faite la valeur du pulseur (9) à sensibiliser la tension, tant au fonctionnement chargé qu'au ralenti, peut être comparée à une valeur de consigne présélectionnée dans le calculateur de processus/indicateur à affichage numérique, et affichée par celui-ci.

Fig. 1

0 048 960